# FASCICULE DE BREVET EUROPEEN

(11) **EP 2 454 929 B1**
(45) Date de publication et mention de la délivrance du brevet: **04.06.2014**
(21) Numéro de dépôt: 11190228.4
(22) Date de dépôt: 23.11.2011
(51) Int. Cl.: A01D 34/416

(54) **Fil de coupe pour un appareil de coupe de végétaux**
Schneidedraht für ein Pflanzenschneidegerät
Cutting wire for a plant-cutting device

(30) Priorité: 23.11.2010 FR 1059640
(43) Date de publication de la demande: 23.05.2012
(73) Titulaire: Speed France S.A.S., 69400 Arnas (FR)
(72) Inventeur: Legrand, Emmanuel, 01240 ST German sur Renon (FR)
(74) Mandataire: Regimbeau

(56) Documents cités:
- EP-A1- 0 435 795
- WO-A1-2008/098764
- DE-A1-102008 009 388
- US-B1- 6 311 398

## Description

La présente invention concerne d'une façon générale des fils de coupe adaptés pour être utilisés dans des appareils de coupe de végétaux, notamment des coupe-bordure ou des débroussailleuses.

Ces fils sont généralement réalisés par extrusion de polyamide, et présentent des formes variées.

Alors que les fils les plus anciens présentaient une section circulaire et étaient lisses sur toute leur étendue, des fils présentant des sections variées ont été développés, afin d'améliorer la qualité de coupe (présence d'arêtes, etc.) et/ou la longévité du fil, et/ou diminuer le bruit de l'appareil en fonctionnement en jouant sur les turbulences.

On trouve ainsi des fils comportant des arêtes, des rainures, des gorges, ou encore de déformations locales du fil le long de son étendue, réalisé généralement par étirage/extrusion de polyamide.

Par soucis d'économie de place, les fils de coupe sont stockés et commercialisés sous forme de bobines. Or la rigidité des matériaux les constituant implique qu'ils ne peuvent d'eux-mêmes rester sous forme de bobines et qui se défait automatiquement si elle n'est pas retenue par un quelconque moyen de maintien.

Typiquement, les bobines de fil de coupe sont commercialisées dans des emballages de forme et de dimensions ajustées à la forme et aux dimensions de la bobine, de sorte que celle-ci soit maintenue en forme par les parois internes de la boîte. La fabrication de ces boîtes a cependant un coût économique et écologique.

L'invention vise donc à proposer un fil de coupe pour un appareil de coupe de végétaux qui puisse être stocké, transporté et commercialisé sans emballage particulier, de manière à réduire l'impact environnemental du produit et à réduire les coûts.

A cet effet, selon un premier aspect, l'invention propose un fil de coupe pour un appareil de coupe de végétaux, tel qu'un coupe-bordures ou une débroussailleuse, le fil étant profilé et adapté pour être enroulé sur lui-même de manière à former une bobine comprenant au moins deux spires, le fil comprenant des aménagements de retenue réciproque de sorte que chaque spire coopère avec au moins une spire adjacente de manière à la retenir mécaniquement, de sorte que la bobine est autoporteuse.

Certains aspects préférés mais non limitatifs du fil sont les suivants :
- deux spires adjacentes s'emboîtent par déformation élastique des aménagements de retenue,
- les aménagements de retenue coopèrent par friction,
- les aménagements de retenue comprennent un élément mâle et un élément femelle s'étendant sur des faces opposées du fil et sur tout ou partie de sa longueur, l'élément mâle de chaque spire de la bobine étant adapté pour venir s'emboîter dans l'élément femelle d'une spire adjacente,
- l'élément mâle et l'élément femelle sont respectivement une nervure et une gorge,
- la nervure et la gorge présentent des sections transversales généralement complémentaires,
- la nervure et la gorge présentent des sections transversales différentes,
- la ou les formes des sections transversales sont choisies parmi les formes arrondies et les formes généralement trapézoïdales,
- la nervure et la gorge ont des faces opposées généralement parallèles, la largeur de la nervure étant légèrement plus grande que celle de la gorge,
- la nervure comprend deux branches élastiquement déformables l'une par rapport à l'autre,
- l'élément mâle est discontinu de façon à favoriser la coupe de végétaux,
- les aménagements présentent un état de surface favorisant la friction.
- le fil est enroulé sur lui-même et essentiellement dépourvu d'un conditionnement assurant son maintien dans cet état, et
- le fil de coupe présente des motifs imprimés.

Selon un deuxième aspect, l'invention propose une bobine de fil de coupe pour un appareil de coupe de végétaux, tel qu'un coupe-bordures ou une débroussailleuse, le fil étant profilé et adapté pour être enroulé sur lui-même de manière à former au moins deux spires, caractérisé en ce que le fil comprend des aménagements de retenue réciproque de sorte que chaque spire coopère avec au moins une spire adjacente de manière à la retenir mécaniquement, de sorte que la bobine est autoporteuse.

Un aspect préféré mais non limitatif de la bobine selon l'invention est qu'elle présente une forme choisie parmi les formes cylindriques, les formes discales et les formes coniques.

Selon un dernier aspect, l'invention propose un distributeur comprenant un ensemble de bobines selon l'invention empilées les unes sur les autres.

D'autres caractéristiques, buts et avantages de la présente invention apparaîtront mieux à la lecture de la description détaillée qui va suivre et en regard des dessins annexés donnés à titre d'exemples illustratifs et sur lesquels :
La figure 1A présente un fil 1 selon l'invention enroulé sur lui-même de manière à former une bobine plate;
La figure 1B présente un fil 1 selon l'invention enroulé sur lui-même de manière à former une bobine cylindrique;
La figure 1C illustre un distributeur de bobines plates conformes à la figure 1 selon l'invention :
La figure 2 représente une vue en coupe d'une première forme de réalisation d'un fil de coupe pour une bobine plate selon l'invention ;
Les figures 3a, 3b et 3c représentent les étapes de coopération de deux spires d'un fil conforme à la figure 2, vues en coupe ;
La figure 4 représente une première variante de la forme de réalisation de la figure 2 selon l'invention ;
La figure 5 représente une deuxième variante de la forme de réalisation de la figure 2 selon l'invention ; et
La figure 6 représente une vue en coupe d'une deuxième forme de réalisation d'un fil de coupe selon l'invention.

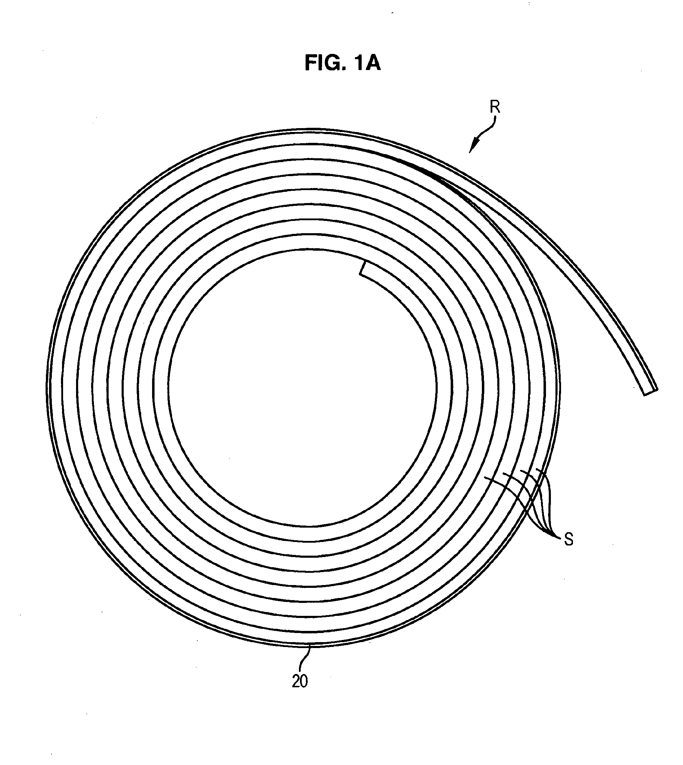

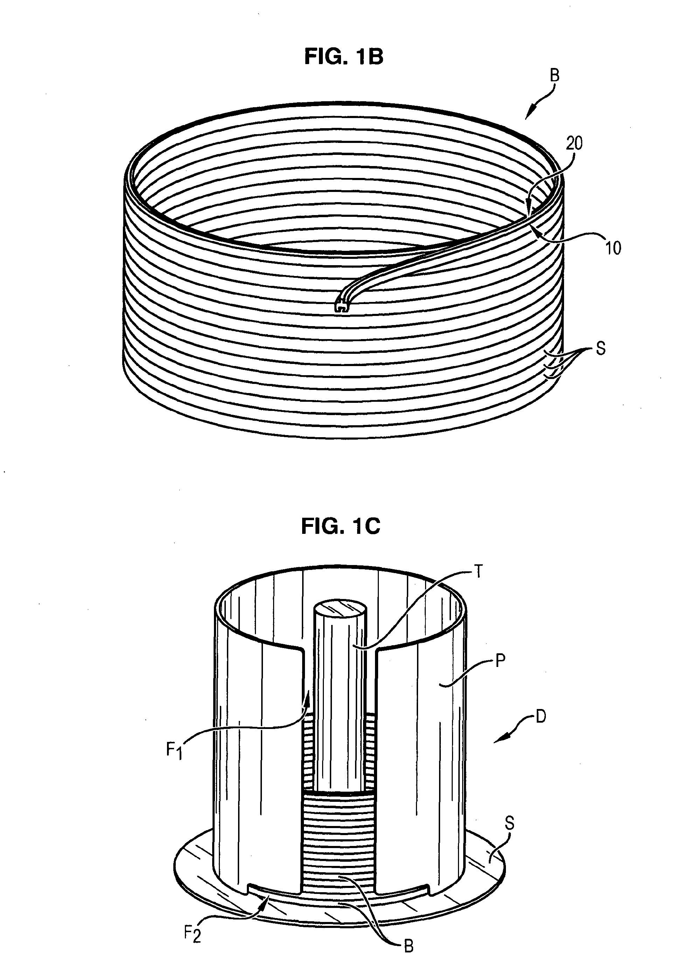

Comme illustré sur les figures 1A et 1B, un fil de coupe 1 conforme à l'invention est profilé et adapté pour être enroulé sur lui-même de manière à former une bobine B autoporteuse.

Par « autoporteuse », on comprendra ici que la bobine B est capable de rester enroulée sur elle-même, sans moyen de retenue externe à celle-ci. Il n'est donc pas nécessaire de bloquer des spires S de la bobine B par un lien entourant ses spires S de manière à les maintenir adjacentes, ni par un emballage ajusté aux dimensions et au format de la bobine.

A cet effet, le fil comprend des aménagements de retenue réciproque 10, 20 de sorte que chaque spire S coopère avec au moins une spire S adjacente de manière à la retenir mécaniquement, de manière à rendre la bobine B autoporteuse.

Plus précisément, les aménagements de retenue 10, 20 sont adaptés pour s'emboîter par déformation élastique.

On obtient donc une bobine B autoporteuse, dont les spires s'emboîtent de manière à former un disque (voir figure 1A) ou un cylindre (voir figure 1 B), selon l'emplacement des aménagements de retenue 10, 20.

L'emballage de la bobine B ne joue donc plus qu'un rôle commercial, et n'a plus besoin de remplir des conditions de retenue du fil à l'état bobiné, de dimensions, etc. Il peut donc être réalisé avec plus de liberté, voire être simplifié ou éliminé.

En référence à la figure 1C, les bobines plates B peuvent par exemple être stockées dans un distributeur D de bobines, tel que celui représenté sur la figure 1C. Un tel distributeur D comprend ici une paroi latérale P globalement cylindrique de révolution et présentant une fente longitudinale F1 parallèle à son axe de révolution. Le distributeur D peut également comprendre un socle S sur lequel est fixée la paroi latérale cylindrique P ainsi qu'une tige centrale T s'étendant perpendiculairement depuis le socle S. Les bobines B plates sont alors enfilées sur la tige T du le distributeur D par la partie supérieure opposée au socle S, et retirées soit par la partie supérieure du distributeur D, soit par une ouverture transversale F2, de préférence adjacente au socle S.

Il est notamment possible d'imprimer les informations techniques et/ou commerciales telles que la marque, les spécificités du fil, etc., en particulier lorsque la bobine B ne comporte pas d'emballage, directement sur les spires S. Pour cela, on peut notamment mettre en oeuvre une impression par tampographie.

On peut ainsi réduire les coûts de fabrication de l'emballage, ainsi que son impact environnemental.

Selon une première forme de réalisation, les aménagements de retenue réciproque 10, 20 comprennent un élément mâle 20 et un élément femelle 10 s'étendant sur tout ou partie de la longueur du fil 1, l'élément mâle 20 étant adapté pour pénétrer dans l'élément femelle 10 lorsque le fil 1 est enroulé sur lui-même de manière à former une bobine B généralement plate (figure 1A),généralement cylindrique (Figure 1 B) ou généralement conique.

Avantageusement, les éléments femelle 10 et mâle 20 sont choisis de manière à ce que le fil puisse être réalisé par les techniques classiques d'étirage/extrusion. Il est préférentiellement réalisé à base de polyamide, mais d'autres matériaux sont bien entendu possibles.

Par exemple, l'élément mâle peut être une nervure 20 s'étendant sur tout ou partie de la longueur du fil, tandis que l'élément femelle 10 peut être une gorge, s'étendant en correspondance avec la nervure. La nervure 20 et la gorge 10 s'étendent de préférence sur des côtés longitudinaux opposés du fil.

Ici, le fil de coupe 1 est symétrique par rapport à un plan passant par le milieu de la nervure et de la gorge. Ceci n'est cependant pas limitatif.

Par exemple, le fil 1 peut avoir un corps principal dont la hauteur est du même ordre de grandeur que la largeur, comprenant une première face latérale à partir de laquelle s'étant la nervure 20, et une face latérale opposée dans laquelle est réalisée la gorge 10, les références 11 désignant les zones du matériau du fil s'étendant de part et d'autre de la gorge.

De manière générale, la forme et les dimensions de la nervure 20 sont ajustées à la forme et aux dimensions de la gorge 10, de sorte que la nervure 20 puisse s'emboîter et être maintenue avec une force adéquate dans la gorge 10 d'une spire adjacente lorsque le fil 1 est enroulé sur lui-même de manière à former la bobine B.

De préférence, la forme et les dimensions de la nervure 20 et de la gorge 10 sont choisies de sorte que la nervure 20 pénètre en force dans la gorge 10 de la spire adjacente, avec déformation élastique du fil dans les zones 11, lorsque le fil 1 est enroulé sur lui-même. Dans ce cas, le rappel élastique du matériau du fil dans ces zones 11 assure la retenue de la nervure 20 de la gorge 10 une fois l'engagement effectué.

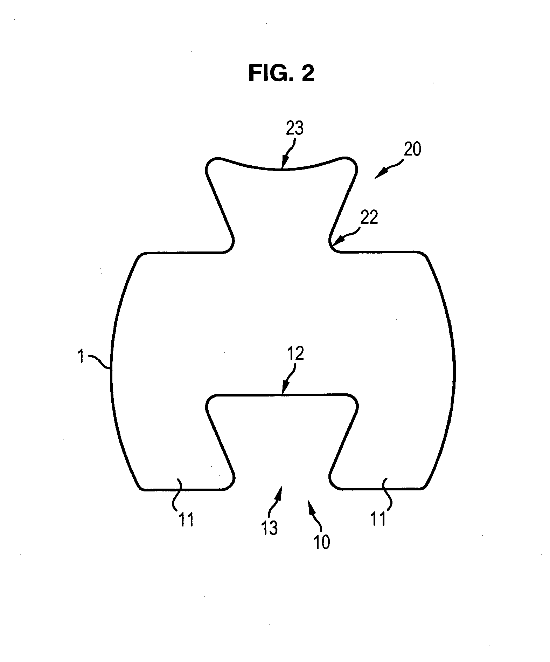

Par exemple, selon une forme de réalisation illustrée sur la figure 2 annexée, la nervure 20 présente des faces supérieure et inférieure opposées 21 qui divergent à partir de sa base 22 en direction de son extrémité libre 23, tandis que les parois homologues de la gorge 10 convergent de la base 12 de la gorge vers son ouverture 13. L'angle de divergence/convergence peut varier assez sensiblement en fonction de la nature et des propriétés du matériau du fil. Il peut varier ainsi de quelques degrés à quelques dizaines de degrés. Les angles pour la nervure et pour la gorge peuvent en outre être différents. On comprend que le coefficient de frottement du fil peut également avoir une influence.

La base 22 de la nervure 20 est alors plus étroite que son extrémité libre 23, tandis que le fond 12 de la gorge est plus large que son ouverture 13.

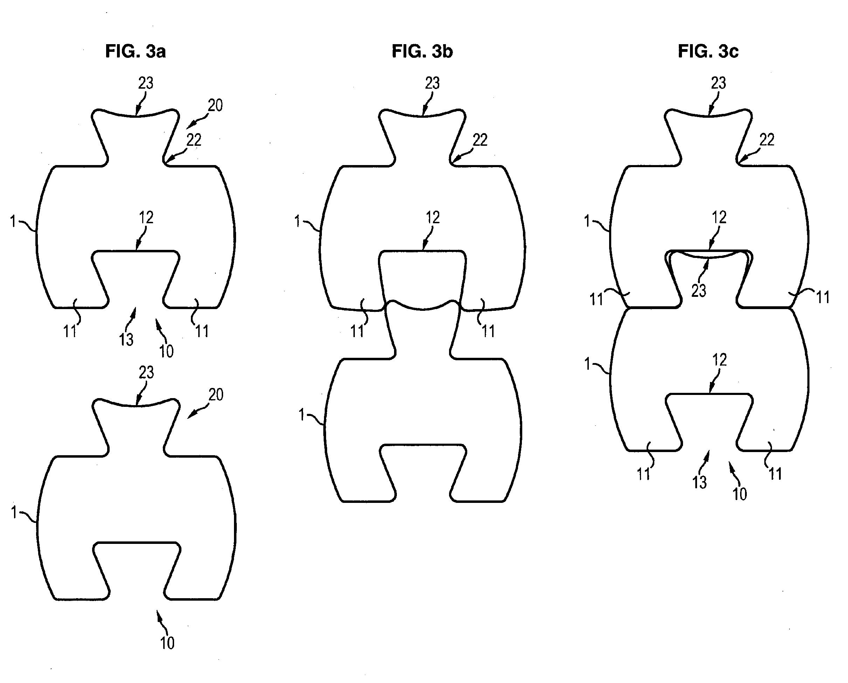

Par ailleurs, la largeur de la base 22 de la nervure est de préférence sensiblement égale à celle de l'ouverture 13 de la gorge. De la sorte, la pénétration en force de la nervure 20 dans la gorge 10 écarte élastiquement les zones 11 du fil (voir figure 3b), afin de laisser le passage à l'extrémité libre de la nervure 20 jusqu'au fond 12 de la gorge. Une fois la nervure 20 insérée dans la gorge 10, le rappel élastique de ces zones 11 vers la nervure 10 maintient celle-ci en place de manière ajustée (figure 3c).

La largeur du fond 12 de la gorge 10 peut éventuellement être légèrement plus grande que celle de l'extrémité libre 23 de la nervure 20, afin de créer un jeu entre eux et faciliter d'éventuels mouvements relatifs des spires dans la bobine de l'enroulement/du déroulement du fil.

L'angle de divergence/convergence peut varier assez sensiblement en fonction de la nature et des propriétés du matériau du fil. Il peut varier ainsi de quelques degrés à quelques dizaines de degrés. Les angles pour la nervure et pour la gorge peuvent en outre être différents. On comprend que le coefficient de frottement du fil peut également avoir une influence.

La face d'extrémité libre 23 de la nervure 20 peut en outre être concave afin de faciliter le mouvement relatif des spires S adjacentes.

Dans un cas limite, on peut avoir une nervure et une gorge à faces opposées parallèles, la largeur de la nervure étant légèrement supérieure à celle de la gorge de manière à occasionner une retenue des spires ensemble essentiellement ou uniquement par le jeu de la friction occasionnée par le rappel élastique des zones 11.

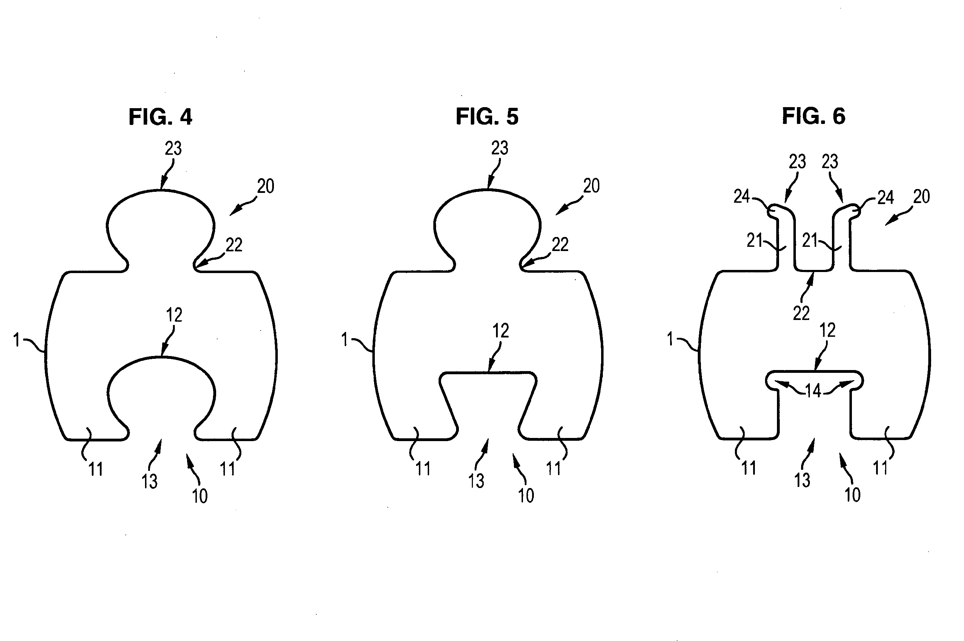

En variante, et comme illustré sur la figure 4, la nervure présente une section généralement arrondie, de forme approximativement circulaire. La gorge 10 peut alors avoir une forme arrondie correspondante.

La forme générale de la nervure 20 et celle de la gorge 10 peuvent toutefois être largement différentes, pour autant que la nervure 20 puisse être insérée à force dans la gorge 10 et y être retenue mécaniquement lorsque le fil est bobiné. Comme illustré sur la figure 5, on peut prévoir une nervure 20 généralement arrondie et une gorge généralement trapézoïdale, ou inversement.

On comprendra donc que l'invention couvre l'ensemble des formes d'aménagement de retenue 10, 20 adaptés pour coopérer ensemble mécaniquement afin de maintenir les spires de la bobine en position, de préférence par déformation élastique et/ou plastique des aménagements.

Selon une deuxième forme de réalisation, et comme illustré sur la figure 6 la nervure 20 peut comporter deux branches 21, inclinées l'une par rapport à l'autre ou parallèles, séparées par un espace 25. A son extrémité libre, chaque branche présente un bossage 24 vers l'extérieur formant une zone de verrouillage.

La gorge 10 dans ce cas peut présenter des parois opposées sensiblement parallèles, se terminant par des renfoncements 14, généralement complémentaires des bossages 24, au voisinage du fond de la gorge. La largeur 11 de la gorge est sensiblement égale à la distance entre les faces externes des deux branches 21.

De la sorte, lors de l'insertion de la nervure 20 dans la gorge 10, les deux branches sont sollicitées en rapprochement jusqu'à ce que les bossages 24 pénètrent les renfoncements complémentaires 14. Dans cette position, les branches 21 regagnent leur position de repos, dans laquelle les bossages 24 permettent la retenue de la nervure 20 dans la gorge 10.

Quel que soit le mode de réalisation, le fil 1 peut être déroulé en extrayant la nervure 20 de la gorge 10. Pour ce faire, il suffit de tirer avec les doigts sur l'extrémité libre du fil 1, de sorte que la nervure 20 sollicite en écartement les parois latérales 11 de la gorge 10 et, le cas échéant, que les branches 21 de la nervure 20 soient sollicités en rapprochement.

On comprendra par ailleurs qu'en plus d'être enroulable de manière à former une bobine B autoporteuse, un fil de coupe 1 conforme à l'invention présente de bonnes qualités de coupe étant donné la présence des éléments mâle 20 et femelle 10, qui créent des arêtes longitudinales plus coupantes que dans le cas d'un corps de coupe massif à bords arrondis.

Afin d'améliorer la qualité de la coupe, le fil 1 peut en outre comprendre des arêtes et autres formes supplémentaires tant que celles-ci n'empêchent pas les éléments mâle 20 et femelle 10 de s'emboîter élastiquement. Il peut s'agir par exemple d'une déformation locale, d'une arête longitudinale s'étendant sur un côté latéral du fil, etc.

Le fil de coupe peut en outre comporter des rugosités au niveau de la nervure et/ou de la gorge afin d'amplifier les frottements et améliorer la retenue mécanique des spires S adjacentes.

Par ailleurs, bien que la nervure et la gorge soient ici décrites comme s'étendant en continuité sur l'étendue du fil, on peut prévoir une rainure et/ou une gorge s'étendant de façon interrompue, notamment pour former, en utilisation, des aménagements de type dents ou autres favorisant la coupe des végétaux.

Enfin, selon la géométrie du fil et en particulier de la position de la gorge et de la nervure, on peut prévoir que l'enroulement du fil sur lui-même donne une forme de disque, une forme de cylindre, mais également toute forme conique intermédiaire.

## Revendications

1. Fil de coupe (1) pour un appareil de coupe de végétaux, tel qu'un coupe-bordures ou une débroussailleuse, le fil (1) étant profilé et adapté pour être enroulé sur lui-même de manière à former une bobine (B) comprenant au moins deux spires (S),
**caractérisé en ce que** le fil (1) comprend des aménagements de retenue (10, 20) réciproque de sorte que chaque spire (S) coopère avec au moins une spire (S) adjacente de manière à la retenir mécaniquement, de sorte que la bobine (B) est autoporteuse.

2. Fil de coupe (1) selon la revendication 1, dans lequel deux spires (S) adjacentes s'emboîtent par déformation élastique des aménagements de retenue (10, 20).

3. Fil de coupe (1) selon l'une des revendications 1 et 2, dans lequel les aménagements de retenue (10, 20) coopèrent par friction.

4. Fil de coupe (1) selon l'une des revendications 1 à 3, dans lequel les aménagements de retenue comprennent un élément mâle (20) et un élément femelle (10) s'étendant sur des faces opposées du fil et sur tout ou partie de sa longueur, l'élément mâle (20) de chaque spire (S) de la bobine (B) étant adapté pour venir s'emboîter dans l'élément femelle (10) d'une spire (S) adjacente.

5. Fil de coupe (1) selon la revendication 4, dans lequel l'élément mâle (20) et l'élément femelle (10) sont respectivement une nervure et une gorge.

6. Fil de coupe selon la revendication 5, dans lequel la nervure et la gorge présentent des sections transversales généralement complémentaires.

7. Fil de coupe selon la revendication 5, dans lequel la nervure et la gorge présentent des sections transversales différentes.

8. Fil de coupe selon l'une des revendications 5 à 7, dans lequel la ou les formes des sections transversales sont choisies parmi les formes arrondies et les formes généralement trapézoïdales.

9. Fil de coupe selon la revendication 5, dans lequel la nervure et la gorge ont des faces opposées généralement parallèles, la largeur de la nervure étant légèrement plus grande que celle de la gorge.

10. Fil de coupe selon la revendication 5, dans lequel la nervure comprend deux branches élastiquement déformables l'une par rapport à l'autre.

11. Fil de coupe selon l'une des revendications 4 à 8, dans lequel l'élément mâle est discontinu de façon à favoriser la coupe de végétaux.

12. Fil de coupe selon l'une des revendications 1 à 11, dans lequel les aménagements présentent un état de surface favorisant la friction.

13. Fil de coupe selon l'une des revendications 1 à 12, enroulé sur lui-même et essentiellement dépourvu d'un conditionnement assurant son maintien dans cet état.

14. Fil de coupe selon la revendication 13, **caractérisé en ce qu'**il présente des motifs imprimés.

15. Bobine (B) de fil de coupe pour un appareil de coupe de végétaux, tel qu'un coupe-bordures ou une débroussailleuse, le fil (1) étant profilé et adapté pour être enroulé sur lui-même de manière à former au moins deux spires (S),
**caractérisé en ce que** le fil (1) comprend des aménagements de retenue (10, 20) réciproque de sorte que chaque spire (S) coopère avec au moins une spire (S) adjacente de manière à la retenir mécaniquement, de sorte que la bobine (B) est autoporteuse.

16. Bobine selon la revendication 15, laquelle présente une forme choisie parmi les formes cylindriques, les formes discales et les formes coniques.

17. Distributeur **caractérisé en ce qu'**il comprend un ensemble de bobines (B) selon la revendication 16 empilées les unes sur les autres.

## Patentansprüche

1. Schneidfaden (1) für ein Pflanzenschneidegerät, wie etwa für einen Trimmer oder eine Motorsense, wobei der Faden (1) profiliert und dazu geeignet ist, auf sich selbst aufgewickelt zu werden, so dass er eine Spule (B) mit zumindest zwei Windungen (S) bildet,
**dadurch gekennzeichnet, dass** der Faden (1) Halteeinrichtungen (10, 20) zum gegenseitigen Festhalten aufweist, so dass jede Windung (S) mit zumindest einer angrenzenden Windung (S) so zusammenwirkt, dass sie mechanisch festgehalten wird, so dass die Spule (B) selbstragend ist.

2. Schneidfaden (1) nach Anspruch 1, wobei zwei aneinandergrenzende Windungen (S) durch elastische Verformung der Halteeinrichtungen (10, 20) ineinandergreifen.

3. Schneidfaden (1) nach einem der Ansprüche 1 und 2, wobei die Festhalteeinrichtungen (10, 20) durch Reibschluss zusammenwirken.

4. Schneidfaden (1) nach einem der Ansprüche 1 bis 3, wobei die Festhalteeinrichtungen ein Einsteckteil (20) und ein Aufnahmeteil (10) aufweisen, die sich an entgegengesetzten Seiten des Fadens und über seine gesamte Länge oder über einen Teil davon erstrecken, wobei das Einsteckteil (20) einer jeden Windung (S) der Spule (B) dazu geeignet ist, in das Aufnahmeteil (10) einer angrenzenden Windung (S) einzugreifen.

5. Schneidfaden (1) nach Anspruch 4, wobei das Einsteckteil (20) und das Aufnahmeteil (10) jeweils eine Rippe und eine Nut sind.

6. Schneidfaden nach Anspruch 5, wobei die Rippe und die Nut im Wesentlichen komplementäre Querschnitte aufweisen.

7. Schneidfaden nach Anspruch 5, wobei die Rippe und die Nut unterschiedliche Querschnitte aufweisen.

8. Schneidfaden nach einem der Ansprüche 5 bis 7, wobei die Form bzw. Formen der Querschnitte aus runden Formen und im Wesentlichen trapezartigen Formen ausgewählt sind.

9. Schneidfaden nach Anspruch 5, wobei die Rippe und die Nut an ihren entgegengesetzten Seiten im Wesentlichen parallel verlaufen, wobei die Breite der Rippe geringfügig größer ist als die der Nut.

10. Schneidfaden nach Anspruch 5, wobei die Rippe zwei Schenkel aufweist, die zueinander elastisch verformbar sind.

11. Schneidfaden nach einem der Ansprüche 4 bis 8, wobei das Einsteckteil unterbrochen ausgeführt ist, so dass das Zuschneiden von Pflanzen begünstigt wird.

12. Schneidfaden nach einem der Ansprüche 1 bis 11, wobei die Einrichtungen einen die Reibung begünstigenden Oberflächenzustand aufweisen.

13. Schneidfaden nach einem der Ansprüche 1 bis 12, der auf sich selbst aufgewickelt und im Wesentlichen verpackungsfrei unter Sicherstellung seines Halts in diesem Zustand ausgeführt ist.

14. Schneidfaden nach Anspruch 13, **dadurch gekennzeichnet, dass** er aufgedruckte Muster aufweist.

15. Spule (B) eines Schneidfadens für ein Pflanzenschneidegerät, wie etwa für einen Trimmer oder eine Motorsense, wobei der Faden (1) profiliert und dazu geeignet ist, auf sich selbst aufgewickelt zu werden, so dass er zumindest zwei Windungen (S) bildet,
**dadurch gekennzeichnet, dass** der Faden (1) Halteeinrichtungen (10, 20) zum gegenseitigen Festhalten aufweist, so dass jede Windung (S) mit zumindest einer angrenzenden Windung (S) so zusammenwirkt, dass sie mechanisch festgehalten wird, so dass die Spule (B) selbstragend ist.

16. Spule nach Anspruch 15, wobei sie eine Form aufweist, die aus zylindrischen Formen, Scheibenformen und konischen Formen ausgewählt ist.

17. Spender, **dadurch gekennzeichnet, dass** er eine Reihe von Spulen (B) nach Anspruch 16 aufweist, die aufeinandergestapelt sind.

## Claims

1. Cutting wire (1) for a plant-cutting appliance, such as an edge trimmer or a brush cutter, the wire (1) being profiled and adapted so as to be wound on itself so as to form a coil (B) comprising at least two turns (S),
**characterised in that** the wire (1) comprises reciprocal holding arrangements (10, 20) so that each turn (S) cooperates with at least one adjacent turn (S) so as to hold it mechanically, so that the coil (B) is self-supporting.

2. Cutting wire (1) according to claim 1, in which two adjacent turns (S) fit together by elastic deformation of the holding arrangements (10, 20).

3. Cutting wire (1) according to one of claims 1 and 2, in which the holding arrangements (10, 20) cooperate by friction.

4. Cutting wire (1) according to one of claims 1 to 3, in which the holding arrangements comprise a male element (20) and a female element (10) extending on opposite faces of the wire and over all or part of its length, the male element (20) of each turn (S) of the coil (B) being adapted to fit in the female element (10) of an adjacent turn (S).

5. Cutting wire (1) according to claim 4, in which the male element (20) and the female element (10) are respectively a rib and a groove.

6. Cutting wire according to claim 5, in which the rib and groove have generally complementary transverse sections.

7. Cutting wire according to claim 5, in which the rib and groove have different transverse sections.

8. Cutting wire according to one of claims 5 to 7, in which the shape or shapes of the transverse sections are chosen from rounded shapes and generally trapezoidal shapes.

9. Cutting wire according to claim 5, in which the rib and groove have generally parallel opposite faces, the width of the rib being slightly greater than that of the groove.

10. Cutting wire according to claim 5, in which the rib comprises two branches that are elastically deformable with respect to each other.

11. Cutting wire according to one of claims 4 to 8, in which the male element is discontinuous so as to assist the cutting of plants.

12. Cutting wire according to one of claims 1 to 11, in which the arrangements have a surface state promoting friction.

13. Cutting wire according to one of claims 1 to 12, wound on itself and essentially devoid of any treatment ensuring holding thereof in this state.

14. Cutting wire according to claim 13, **characterised in that** it has printed patterns.

15. Coil (B) of cutting wire for a plant-cutting appliance, such as an edge trimmer or a brush cutter, the wire (1) being profiled and adapted so as to be wound on itself so as to form at least two turns (S),
**characterised in that** the wire (1) comprises reciprocal holding arrangements (10, 20) so that each turn (S) cooperates with at least one adjacent turn (S) so as to hold it mechanically, so that the coil (B) is self-supporting.

16. Coil according to claim 15, which has a shape chosen from cylindrical shapes, discal shapes and conical shapes.

17. Dispenser, **characterised in that** it comprises a set of coils (B) according to claim 16 stacked one on top of the other.
